# EUROPÄISCHE PATENTANMELDUNG

(11) **EP 1 174 991 A2**
(43) Veröffentlichungstag der Anmeldung: **23.01.2002**
(21) Anmeldenummer: 01000296.2
(22) Anmeldetag: 16.07.2001
(51) Int. Cl.: H02M 3/337

(54) **Konverter**

(30) Priorität: 19.07.2000 DE 10035139
(71) Anmelder: Philips Corporate Intellectual Property GmbH, 52064 Aachen (DE); Koninklijke Philips Electronics N.V., 5621 BA Eindhoven (NL)
(72) Erfinder: Raets, Hubert, c/o Philips Corp. Intel. Prop. GmbH, 52064 Aachen (DE); Dürbaum, Thomas, Dr. Philips Corp. Int. Prop. GmbH, 52064 Aachen (DE)
(74) Vertreter: Volmer, Georg, Dipl.-Ing.

(57) **Zusammenfassung**

Die Erfindung betrifft einen Konverter mit
- einer ein erstes, zweites, drittes und viertes Schaltelement (S1, S2, S3, S4) aufweisenden Vollbrückenschaltung zur Umsetzung einer DC-Spannung (U_{Bat}) in eine AC-Spannung (U_{~});
- einem mindestens ein kapazitives Element (C_{S}) aufweisenden Schaltkreis (3) zur Kopplung der Vollbrückenschaltung mit einem Konverterausgang;
- einer Steuerschaltung (5) zur Steuerung der Schaltelemente (S1, S2, S3, S4) der Vollbrückenschaltung, wobei ein erster Modus vorgesehen ist, in dem die Vollbrückenschaltung durch Veränderung der Schaltzustände des ersten und zweiten Schaltelements (S1, S2) als Halbbrückenschaltung betrieben wird und die Schaltzustände des dritten und vierten Schaltelements (S3, S4) nicht verändert werden, und wobei ein zweiter Modus vorgesehen ist, in dem die Vollbrückenschaltung durch Veränderung der Schaltzustände aller vier Schaltelemente (S1, S2, S3, S4) als Vollbrückenschaltung betrieben wird.

Ein solcher Konverter ist zum Betrieb an unterschiedlichen Netzwechselspannungen verschiedener Wechselspannungsnetze geeignet.

## Beschreibung

Die Erfindung betrifft einen Konverter zur Erzeugung einer Gleichspannung. Derartige Konverter werden beispielsweise in (Schalt-)Netzteilen eingesetzt, die eine Netzwechselspannung in eine Versorgungsgleichspannung umsetzen.

In J. Wüstehube, Schaltnetzteile, 2. überarbeitete Auflage, S. 139 f. ist eine Brückengleichrichterschaltung für ein Schaltnetzteil bekannt, die zur Umwandlung einer Netzwechselspannung in eine DC-Spannung dient, die wiederum mittels eines DC-DC-Konverters in eine gut geregelte Versorgungsgleichspannung umgesetzt wird. Die Brückengleichrichterschaltung enthält eine Umschaltvorrichtung, mittels derer die Brückengleichrichterschaltung an die jeweils anliegende Netzwechselspannung (110 ... 127 Volt z. B. in den USA oder 220 ... 240 Volt z. B. in Europa) angepasst wird, so dass die erzeugte DC-Spannung unabhängig von der anliegenden Netzwechselspannung näherungsweise gleiche Werte hat.

Der Erfindung liegt die Aufgabe zugrunde, einen Konverter zu schaffen, der möglichst kostengünstig und zum Betrieb an unterschiedliche Netzwechselspannungen verschiedener Wechselspannungsnetze geeignet ist.

Die Aufgabe wird dadunch gelöst, dass der Konverter folgende Komponenten aufweist:
- eine ein erstes, zweites, drittes und viertes Schaltelement aufweisende Vollbrückenschaltung zur Umsetzung einer DC-Spannung in eine AC-Spannung;
- einem mindestens ein kapazitives Element aufweisenden Schaltkreis zur Kopplung der Vollbrückenschaltung mit einem Konverterausgang;
- einer Steuerschaltung zur Steuerung der Schaltelemente der Vollbrückenschaltung, wobei ein erster Modus vorgesehen ist, in dem die Vollbrückenschaltung durch Veränderung der Schaltzustände des ersten und zweiten Schaltelements als Halbbrückenschaltung betrieben wird und die Schaltzustände des dritten und vierten Schaltelements nicht verändert werden, und wobei ein zweiter Modus vorgesehen ist, in dem die Vollbrückenschaltung durch Veränderung der Schaltzustände aller vier Schaltelemente als Vollbrückenschaltung betrieben wird.

Durch Verwendung der beiden Modi lassen sich unterschiedliche Verhältnisse von der Ausgangsgleichspannung zur DC-Spannung einstellen. Der Bauteileaufwand für den Konverter wind minimal gehalten. Die zur Realisierung der Erfindung notwendigen Modifikationen eines Konverters werden im wesentlichen auf die geeignete Realisierung der Steuerung der Konverterschaltelemente konzentriert. Die Funktionen der Steuerschaltung lassen sich leicht und mit nur geringem zusätzlichen Kostenaufwand realisieren, insbesondere wenn die Steuerschaltung mittels eines integrierten Schaltkreises (IC) realisiert wird. Der Konverter kann insbesondere bei unterschiedlichen eingangsseitig anliegenden Netzspannungen die Ausgangsgleichspannung konstant halten. Mit Hilfe dieses Konverters können aber auch unterschiedliche Bereiche der Ausgangsgleichspannung bei gleich bleibender Netzspannung eingestellt werden.

Anspruch 2 bezieht sich auf eine mögliche Erfindungsvariante, bei der im zweiten Modus die Schaltelemente paarweise ein- und ausgeschaltet werden. Je zwei Schaltelemente werden hier synchron ein- bzw. ausgeschaltet, so dass sich die Einschaltphasen je zweier Schaltelemente decken (was für die Ausschaltphasen ebenso gilt). Alternativ könnte für den zweiten Modus beispielsweise auch eine Ansteuerung der Schaltelemente realisiert werden, bei der die Einschaltphasen aller vier Schaltelemente in Phase liegen (in einer sogenannten "Phase-Shifted PWM Fullbridge").

Anspruch 3 beschreibt eine andere Ausgestaltung. Werden hier beispielsweise die Ein- und Ausschaltphasen der Schaltelemente in beiden Modi ungefähr gleich lang gehalten (50:50-Steuerung), so kann auf diese Weise das Verhältnis von Ausgangsgleichspannung zur DC-Spannung im zweiten Modus ungefähr doppelt so groß eingestellt werden wie im ersten Modus. Der Konverter kann so beispielsweise in den USA mit einer Netzspannung von ca. 110 Volt dieselbe Ausgangsgleichspannung liefern wie in Europa mit einer ungefähr doppelt so großen Netzspannung, wobei bei der niedrigeren Netzspannung der zweite Modus und bei der höheren Netzspannung der erste Modus verwendet wird. Vorzugsweise ist wie in Anspruch 6 eine automatische Umschaltung zwischen den beiden Modi vorgesehen, so dass eine automatische Anpassung an unterschiedliche Netzspannungen erfolgt. Insbesondere wird hierzu die der Vollbrückenschaltung zugeführte DC-Spannung ausgewertet, d.h. einer entsprechenden Steuerschaltung zugeführt. Eine direkte Auswertung der dem Konverter zugeführten Netzspannung wäre aber beispielsweise grundsätzlich auch möglich

Anspruch 4 gibt die bevorzugte Realisierung des Konverters als resonanter Konverter an, was eine Minimierung der Schaltverluste und eine kleinere Bauform des Konverters ermöglicht. Hier sind die verschiedensten Ausführungsvarianten mit ein oder mehreren kapazitiven und ein oder mehreren induktiven Elementen einsetzbar. Mit dem Merkmal nach Anspruch 5 wird eine häufig erforderliche Potentialtrennung von Konvertereingang und Konverterausgang erreicht.

Ein Ausführungsbeispiel der Erfindung wird nachfolgend anhand der Zeichnungen näher erläutert. Es zeigen:
- Fig. 1: einen erfindungsgemäßen Konverter;
- Fig 2A bis 2C: Spannungsverläufe für einen ersten Konverterschaltmodus und
- Fig 3Abis 3D: Spannungsverläufe für einen zweiten Konverterechaltmodus.

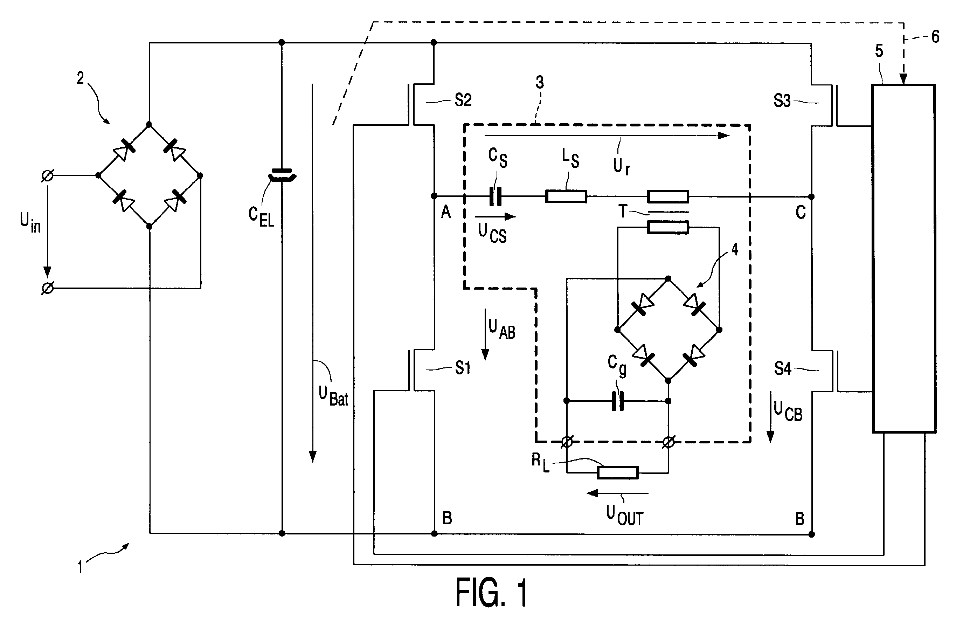

Fig 1 zeigt einen Konverter 1, dem an seinem Eingang eine Netzwechselspannung Uᵢₙ zugeführt wird, die mittels einer Brückengleichrichterschaltung 2 gleichgerichtet und anschließend mittels eines Glättungskondensators C_{EL} geglättet wird. Die infolgedessen am Glättungskondensator C_{EL} abfallende DC-Spannung (Gleichspannung) U_{Bat} wird einer Vollbrückenschaltung mit einem ersten Schaltelement S1, einem zweiten Schaltelement S2, einem dritten Schaltelement S3 und einem vierten Schaltelement S4 zugeführf. Die Schaltelemente sind hier als Feldeffekttransistoren ausgeführt. Die Spannung U_{Bat} liegt sowohl an der Reihenschaltung aus den beiden Schaltelementen S1 und S2 als auch an der Reihenschaltung aus den beiden anderen Schaltelementen S3 und S4 an, d.h. die beiden Schaltelement-Reihenschaltungen liegen parallel zueinander und sind an einem Punkt B miteinander und mit einem Anschluss des Kondensators C_{EL} verbunden. Eine zwischen einem Punkt A zwischen den Schaltelementen S1 und S2 und einem Punkt C zwischen den Schaltelementen S3 und S4 abfallende AC-Spannung (Wechselspannung) U~, die durch Zerhacken der Spannung U_{Bat} erzeugt wird, wird einem Schaltkreis 3 zugeführt, an dessen Ausgang, der zugleich der Ausgang des Konverters 1 ist, eine Ausgangsgleichspannung Vₒᵤₜ liegt, die zur Versorgung einer Last R_{L} dient.

Der Schaltkreis 3 enthält Resonanzkreiselemente: hier eine Kapazität C_{S} und eine Induktivität L_{S}, die einen Reihenresonanzkreis bilden. Die Reihenschaltung aus Kapazität C_{S} und Induktivität L_{S} liegt in Reihe zu einer Primärwicklung eines Transformators T, der eine Potentialtrennung zwischen Konvertereingang und Konverterausgang bewirkt. Die Reihenschaltung aus Kapazität C_{S}, Induktivität L_{S} und Primärwicklung des Transformators T liegt zwischen den Punkten Aund C. Eine an der Sekundärwicklung des Transformators T abfallende Spannung wird mittels einer Brückengleichrichterschaltung 4 gleichgerichtet und anschließend mittels eines Glättungskondensators C_{g} geglättet. Die am Kondensator C_{g} abfallende Spannung ist die am Ausgang des Konverters 1 anliegende Ausgangsgleichspannung Uₒᵤₜ.

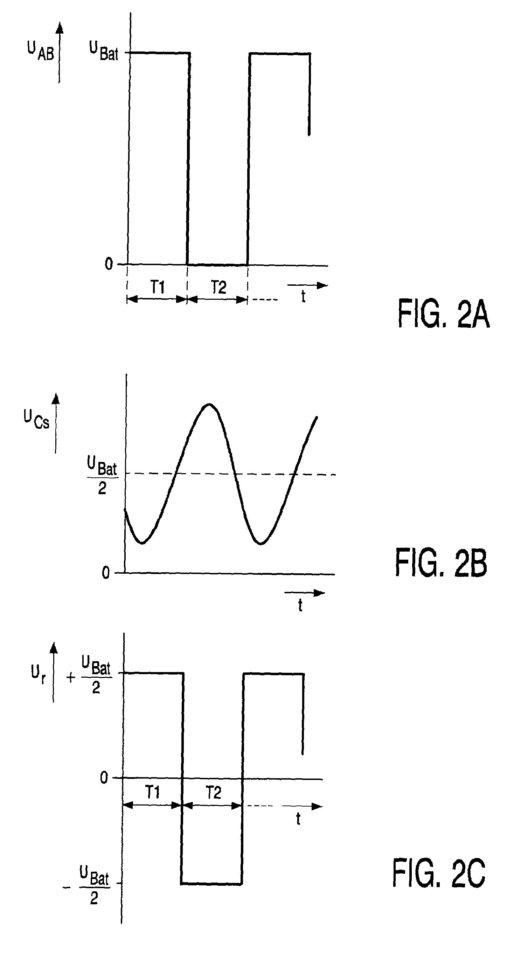

Die Schaltelemente S1 bis S4 werden mittels einer Steuerschaltung 5 durch Anlegen geeigneter Steuersignale an die Steuereingänge der Schaltelemente gesteuert, d.h. eingeschaltet (in den leitenden Zustand überführt) oder ausgeschaltet (in den nichtleitenden Zustand überführt) in einer weiter unten anhand der Fig. 2Abis 2C und 3Abis 3D erläuterten Weise. Dabei steuert die Steuerschaltung 5 die Schaltelemente S1 bis S4 in zwei unterschiedlichen Modi, die zwei unterschiedliche Werte des Verhältnisses Uₒᵤₜ/U_{Bat} bzw. damit auch auf unterschiedliche Werte des Verhältnisses Uₒᵤₜ/Uᵢₙ bewirken.

Die Steuerschaltung 5 wird vorzugsweise mittels eines integrierten Schaltkreises (IC) realisiert, der gegebenenfalls auch die vier Schaltelemente S1 bis S4 aufweisen kann.

Fig 2Abis 2C verdeutlichen die Funktionsweise des ersten Modus. Das Schaltelement S3 ist in diesem Modus dauernd ausgeschaltet; das Schaltelement S4 ist in diesem Modus dauernd eingeschaltet, so dass die am Schaltelement S4 abfallende Spannung gleich Null ist (Kurzschluss); grundsätzlich könnte dies aber auch umgekehrt sein, d.h. das Schaltelement S3 wäre dann dauernd eingeschaltet und das Schaltelement S4 dauernd ausgeschaltet. In diesem ersten Modus werden weiterhin die Schaltelemente S1 und S2 abwechselt ein- und ausgeschaltet. Die Länge der Ein- und Ausschaltphasen ist hier annähernd gleich. Dies führt auf einen zeitlichen Verlauf der am Schaltelement S1 abfallenden Spannung U_{AB} wie in Fig 2A In Zeiträumen T1 ist das Schaltelement S1 ausgeschaltet und das Schaltelement S2 eingeschaltet, so dass in diesen Zeiträumen die Spannung U_{AB} den Wert der Spannung U_{Bat} annimmt. In Zeiträumen T2, die sich mit den Zeiträumen T1 abwechseln, ist das Schaltelement S1 eingeschaltet und das Schaltelement S2 ausgeschaltet, so dass in den Zeiträumen T2 die Spannung U_{AB} gleich Null ist.

Während des Betriebs des Konverters 1 im ersten Modus stellt sich an der Resonanzkreiskapazität C_{S} ein Verlauf der an dieser Kapazität abfallenden Spannung U_{CS} wie in Fig. 2B dargestellt ein. Die Spannung U_{CS} schwingt um einen Gleichanteil mit dem einem Wert von ungefähr U_{Bat}/2. Damit korrespondiert ein Verlauf der zwischen den Punkten A und C abfallenden und damit dem Schaltkreis 3 zugeführten Spannung U_{~} gemäß Fig 2C. Die Spannung U_{~} ergibt sich unmittelbar aus der Spannung U_{AB}, indem von dieser der Gleichanteil U_{Bat}/2 subtrahiert wird. Die Spannung U_{~} hat hier im ersten Modus den Amplitudenwert U_{Bat}/2.

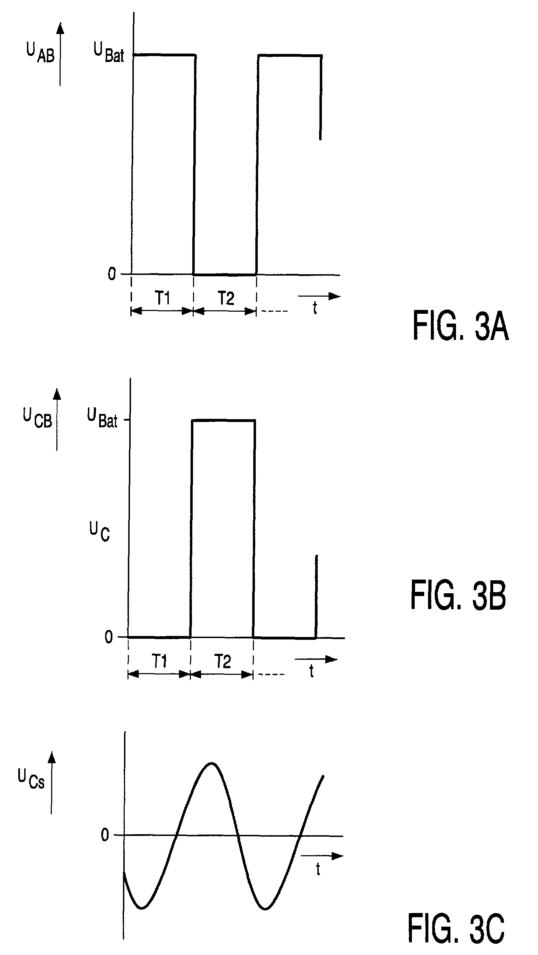

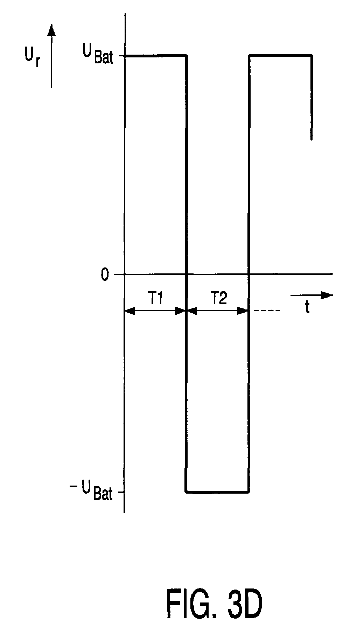

Der zweite Konverterbetriebsmodus wird anhand der Figuren 3Abis 3D erläutert. In diesem Modus werden die Schaltelemente S1 bis S4 paarweise abwechselnd ein- und ausgeschaltet. In den Zeiträumen T1 sind die Schaltelemente S1 und S3 ausgeschaltet und die Schaltelemente S2 und S4 eingeschaltet. In den Zeiträumen T2, die sich - wie schon oben erwähnt - mit den Zeiträumen T1 abwechseln, sind die Schaltelemente S1 und S3 eingeschaltet und die Schaltelemente S2 und S4 ausgeschaltet. Der sich ergebende zeitliche Verlauf der Spannung U_{AB} (siehe Fig. 3A) ist der gleiche wie im ersten Modus (vgl. Fig 2A). Allerdings ist die am Schaltelement S4 abfallende Spannung U_{CB} nur in den Zeiträumen T1 gleich Null. In den Zeiträumen T2 nimmt die Spannung U_{CB} den Wert U_{Bat} an. Die Betriebsmodus bewirkt einen Verlauf der Spannung U_{CS} am Kondensator C_{S} gemäß Fig. 3C. Die Spannung U_{CS} hat wiederum einen schwingungsförmigen Verlauf, allerdings ohne Gleichanteil. Die Spannung U_{~} ergibt sich aus der Differenz U_{AB}-U_{CB} und hat den in Fig 3D gezeigten Verlauf. Im Vergleich zur sich im ersten Modus ergebenden Spannung U_{~} gemäß Fig. 2C ist die Amplitude doppelt so groß, d.h. hat hier den Wert U_{Bat}. Bei gleicher Netzspannung Uᵢₙ bzw. gleicher Spannung U_{Bat} ergibt sich im zweiten Modus eine doppelt so große Konverterausgangsgleichspannung Uₒᵤₜ.

Insbesondere kann mittels des erfindungsgemäßen Konverters 1 auch eine Anpassung an unterschiedliche Netzspannungsbereiche Uᵢₙ (z. B. für die sich ungefähr um den Faktor 2 unterscheidenden Netzspannungen in den USA und in Europa) durchgeführt werden, so dass trotz der sich unterscheidenden Netzspannungen der Konverter 1 dieselbe konstante Ausgangsgleichspannung Uₒᵤₜ liefert, die für die Stromversorgung eines elektrisches Geräts oder einer Komponente eines elektrischen Geräts verwendet wird Die Umschaltung zwischen den beiden beschriebenen Betriebsmodi erfolgt insbesondere automatisch, wobei der Steuerschaltung ein dem aktuellen Wert der Spannung U_{Bat} entsprechendes Signal zugeführt wird (angedeutet durch die gestrichelte Linie 6) und in Abhängigkeit von diesem Signal die Schaltelemente S1 bis S4 gemäß dem oben geschriebenen ersten oder zweiten Modus gesteuert werden. Vorzugsweise wird der Steuerschaltung wie in Fig. 1 angedeutet die Spannung U_{Bat} selbst zugeführt. Es könnte aber auch eine Steuerschaltung vorgesehen werden, die beispielsweise die Netzspannung Uᵢₙ direkt auswertet.

Die Erfindung ist nicht auf die beschriebene Ausführungsform des Konverters 1 beschränkt. Abwandlungen können beispielsweise andere Anordnungen von Resonanzkreiselementen enthalten. Auch andere Verhältnisse T1/T2 (die während des Konverterbetrieb auch durchaus variabel einstellbar sein können) sind denkbar, um andere Verhältnisse von Uₒᵤₜ zu U_{Bat} einzustellen. Weiterhin sind grundsätzlich auch Pausen zwischen jeweils zwei aufeinanderfolgenden Zeiträumen T1 und T2 möglich, in denen im zweiten Konverterbetriebsmodus sowohl die Spannung U_{AB} als auch die Spannung U_{CB} den Wert Null haben.

Weiterhin kann für den zweiten Konverterschaltmodus eine sogenannte "Phase-Shifted PWM Full-Bridge"-Ansteuerung der vier Schaltelemente S1 bis S4 erfolgen, so dass im zweiten Modus die Einschaltphasen der Schaltelemente S1 und S3 bzw. der Schaltelemente S2 und S4 nicht parallel, sondern zeitlich versetzt (in Phase) liegen. Eine solche Art und Weise, eine Vollbrückenschaltung zu betreiben, ist beispielsweise aus Unitrode Power Supply Seminar, SEM-800, Bob Mammano und Jeff Putsch: "Fixed-Frequency, Resonant-Switched Pulse Width Modulation with Phase-Shifted Control", Sep 91, Seiten 5-1 bis 5-7, insbesondere aus der dort angegebenen Fig. 1 mit zugehöriger Beschreibung bekannt. Dieses Dokument wird hiermit in die Amreldung mit einbezogen.

## Patentansprüche

1. Konverter mit
- einer ein erstes, zweites, drittes und viertes Schaltelement (S1, S2, S3, S4) aufweisenden Vollbrückenschaltung zur Umsetzung einer DC-Spannung (U_{Bat}) in eine AC-Spannung (U_{~});
- einem mindestens ein kapazitives Element (C_{S}) aufweisenden Schaltkreis (3) zur Kopplung der Vollbrückenschaltung mit einem Konverterausgang;
- einer Steuerschaltung (5) zur Steuerung der Schaltelemente (S1, S2, S3, S4) der Vollbrückenschaltung, wobei ein erster Modus vorgesehen ist, in dem die Vollbrückenschaltung durch Veränderung der Schaltzustände des ersten und zweiten Schaltelements (S1, S2) als Halbbrückenschaltung betrieben wird und die Schaltzustände des dritten und vierten Schaltelements (S3, S4) nicht verändert werden, und wobei ein zweiter Modus vorgesehen ist, in dem die Vollbrückenschaltung durch Veränderung der Schaltzustände aller vier Schaltelemente (S1, S2, S3, S4) als Vollbrückenschaltung betrieben wird.

2. Konverter nach Anspruch 1,
**dadurch gekennzeichnet,**
**dass** im zweiten Modus die Schaltelemente (S1, S2, S3, S4) der Vollbrückenschaltung paarweise abwechselnd eingeschaltet und ausgeschaltet werden.

3. Konverter nach Anspruch 1 oder 2,
**dadurch gekennzeichnet,**
**dass** vorgesehen ist,
- im ersten Modus das erste und zweite Schaltelement (S1, S2), die in Reihe geschaltet sind und als eine erste Schaltelementreihenschaltung an der DC-Spannung (U_{Bat}) liegen, abwechselnd ein- und auszuschalten, wobei die am ersten Schaltelement (S1) abfallende Spannung (U_{AB}) als AC-Spannung dem das kapazitive Element aufweisenden Schaltkreis (3) zugeführt wird, und
- im zweiten Modus das dritte Schaltelement (S3), das mit dem vierten Schaltelement (S4) in Reihe geschaltet ist, wobei die Reihenschaltung aus drittem und viertem Schaltelement (S3, S4) an der DC-Spannung (U_{Bat}) liegt, parallel zum ersten Schaltelement (S1) ein- und auszuschalten und das vierte Schaltelement (S4) parallel zum zweiten Schaltelement (S2) ein- und auszuschalten.

4. Konverter nach einem der Ansprüche 1 bis 3,
**dadurch gekennzeichnet,**
**dass** der das kapazitive Element aufweisende Schaltkreis (3) ein resonanter Schaltkreis ist.

5. Konverter nach einem der Ansprüche 1 bis 4,
**dadurch gekennzeichnet,**
**dass** ein Transformator (T) zur Potentialtrennung zwischen AC-Spannung (U_{~}) und Ausgangsgleichspannung (Uₒᵤₜ) vorgesehen ist.

6. Konverter nach einem der Ansprüche 1 bis 5,
**dadurch gekennzeichnet,**
**dass** eine automatische Umschaltung zwischen den beiden Modi in Abhängigkeit von der DC-Spannung (U_{Bat}) vorgesehen ist.

7. Integrierter Schaltkreis mit der Steuerschaltung (5) des Konverters nach einem der Ansprüche 1 bis 6.

8. Integrierter Schaltkreis nach Anspruch 7, der auch die vier Schaltelemente (S1, S2, S3, S4) der Vollbrückenschaltung des Konverters nach einem der Ansprüche 1 bis 6 enthält.
